# EUROPEAN PATENT APPLICATION

(11) **EP 4 198 093 A1**
(43) Date of publication of application: **21.06.2023**
(21) Application number: 21215087.4
(22) Date of filing: 16.12.2021
(51) Int. Cl.: C09B 61/00, C09B 1/00, C09B 67/44, D06P 3/14

(54) **A METHOD OF EXTRACTING NATURAL DYESTUFFS FROM THE WASTE-STREAMS OF A BOTANICAL BIOMASS**

(71) Applicant: Givaudan SA, 1214 Vernier (CH)
(72) Inventor: The designation of the inventor has not yet been filed
(74) Representative: Global Patents

(57) **Abstract**

A method of extracting natural dyestuffs from the waste-streams of a botanical biomass.

The method is a one-pot process of preparing a dyestuff comprising the steps of:

- providing a botanical biomass selected from rose containing an oil useful as a flavour, fragrance, cosmetic, medicinal or well-being ingredient;

- treating the biomass with an organic solvent in which the oil is soluble to form an oil-containing phase;

- separating the oil-containing phase from the biomass;

- subjecting the biomass to a process of steam distillation to remove any residual solvent from the biomass and to create an aqueous phase containing the dyestuff; and

- recovering the dyestuff in an aqueous solution.

## Description

The present invention is concerned with methods of preparing dyestuffs from a botanical biomass; dyestuffs made according to said methods; and their use in colouring textiles.

### Background of the invention

The majority of the output of the dyestuff industry today consists of synthetic dyes. Unfortunately, however, these materials contribute significantly to global water pollution, and the waste products attendant with the manufacture of many of them, as well as their degradation products, are associated with risks related to health, repro-toxicity and allergy.

At the same time, natural resources are becoming scarcer, and given the high demand for botanical resources generated by many industries including the food, flavour, fragrance and cosmetic industries, for the dyestuff manufacturers that would like to produce natural dyestuffs, the required raw materials remain difficult to obtain, and then only at very high cost, making the production of natural dyestuffs prohibitively expensive. Still further, although the food, flavour, fragrance and cosmetic industries consume significant quantities of botanical ingredients to create their products, they find it difficult to valorize the waste-streams that they produce.

Methods of extracting botanical biomass to yield different fractions, which can be utilized and therefore valorized in different industries are known in the art.

For example, US9,215,885 describes a process of twice extracting fruit matter in a series of sequential steps to yield two fractions with different utility. A fruit juice is useful for its gustatory properties and can be valorized as such, whereas a pro-anthocyanidine extract can be valorized for its health & well-being benefits.

Another example of a similar process is disclosed in US2012/0135,109, which describes a process of further extracting the fibrous waste recovered from the extraction of fruit or vegetables to yield a material that is useful as a source of dietary fibre.

Through these various prior art processes, botanical materials are processed in sequential extraction steps to produce a plurality of valuable products having different utilities. However, such sequential processes involve once-extracted biomass residues being dehydrated to remove large amounts of moisture, and transported to other actors in the supply chain to carry out subsequent extraction steps. These supply chain activities are not only energy intensive and polluting in terms of the large amounts of CO₂ they produce, they also create a significant toxicological hazard attendant to microorganism proliferation in moist waste material being stored and transported over prolonged periods of time.

Furthermore, none of the prior art processes described above are concerned with the production of dyestuffs from botanical biomass.

Cultivated tinctorial plants have been explored as raw materials in the production of natural dyes as an alternative, or complement, to synthetic dyes. However, such production is carried out today by artisanal actors who find problems in scalability because of low extraction yields and because they compete with the fragrance and food industries, at least, for raw materials.

Bechtold et al in J Sci Food Agric 86:233-242 (2006) describe a process of extracting dyes from food and beverage wastes. The already-exhausted waste materials are further processed in a separate and sequential step whereupon the dyestuffs are recovered in a laboured and energy intensive extraction step.

US 9,340,675 describes a process of extracting natural dyes from a vegetal biomass that is the once-extracted residue of agricultural crops. The process requires collection and transportation of the waste biomass residue from an adjacent industrial activity before extracting it for at least 2 hours at a temperature of 120 to 350 degrees centigrade, which is time-consuming, energy inefficient and polluting.

The prior art also describes processes of extracting dyestuffs from rose and lavender waste-stream pulp in solvents at temperatures ranging from 100 to 300 degrees centigrade. More particularly, Karaboyaci et al in The Journal of The Textile Institute, 105:11, 1160-1166 describes a process of extracting rose petal pulp in boiling solvent for a period of 30 to 120 minutes. Although the waste is not dried in this process, the once-extracted pulp is nevertheless subjected to an energy inefficient and polluting additional extraction step. Finally, the method is hardly scalable as microbiological contamination of the wet waste (before the dyestuff extraction) happens within hours or days of storage, which makes its handling, and supply chain issues more generally, difficult and even dangerous as toxic hydrogen sulphide can be generated and concentrate in enclosed and low oxygen environments.

In summary, the prior art does recognize the value in methods for producing natural dyestuffs from waste-streams that can provide alternatives, or complements, to synthetic dyestuffs while avoiding depletion of natural resources, and maintaining botanical diversity. However, all of these processes posited in the prior art involve the step of carrying out an energy-intensive and polluting additional extraction step on a once-extracted vegetal biomass. None of the prior art processes puts the skilled person in possession of a scalable process of producing natural dyestuffs for a combination of reasons. These reasons include the complexity of the supply chain needed to gather harvested material in a timely fashion; the requirement to process waste biomass quickly to avoid microbiological contamination and the attendant toxicological risks; the complexity and portability of the equipment needed to process the waste quickly; the energy required to extract and produce natural dyestuffs from the biomass; and the cost, both in financial terms and also in terms of carbon dioxide emissions.

There remains a need to provide a process of preparing natural dyestuffs from botanical waste-streams in an energy-efficient and environmentally-friendly manner that is not encumbered by any of the problems associated with the prior art.

### Summary of the invention

The object of the present invention is to address the deficiencies in the prior art and provide a sustainable, scalable and low-cost process to produce natural dyestuffs that are of use in the textile dyeing industry.

Accordingly, the invention provides in a first aspect a process of preparing a dyestuff comprising the steps of:
- providing a botanical biomass containing an oil useful as a flavour, fragrance, cosmetic, medicinal or well-being ingredient;
- heating the biomass in the presence of water to separate the oil-containing phase from an aqueous phase containing the dyestuff; and
- recovering the dyestuff in an aqueous solution.

The invention provides in a second aspect an aqueous solution comprising a dyestuff obtained by the process according to the invention described herein.

The invention provides in a third aspect the use of the aqueous solution comprising the dyestuff for colouring a textile and/or a fabric.

The invention provides in a fourth aspect a textile and/or fabric coloured with the aqueous solution comprising the dyestuff.

The invention provides, in a fifth aspect, apparatus for carrying out the process of preparing the oil phase and the dyestuff.

The details, examples and preferences provided in relation to any one or more of the stated aspects of the present invention will be further described herein and apply equally to all aspects of the present invention. Any combination of embodiments, examples and preferences described herein below in all possible variations thereof are encompassed by the present invention unless otherwise indicated herein, or otherwise clearly contradicted by context.

### Detailed description of the invention

The prior art as it relates to processes of obtaining dyestuffs from once-extracted vegetal biomass residues teaches that in order to extract a dyestuff, the biomass must be subject to pre-treatments, for example treatment with an acid, or boiling at high temperatures for long periods of time. The once-extracted biomass residues employed can either be in a dried state, the provision of which dried mass is an energy-intensive process and disadvantageous as such, or in the form of a pulp, which is also problematic because not only does storing and transporting wet biomass create a risk of microbial contamination, but the transportation of wet residue requires a large storage infrastructure, is very energy inefficient and is environmentally unfriendly, and costly as such.

The present invention is based on the surprising discovery that the extraction of fresh botanical biomass by distillation for the primary purpose of recovering and collecting oil fractions useful in food, flavouring, fragrance, cosmetic, medicinal or well-being applications results in the concomitant creation of a highly coloured aqueous waste, often referred to as still bottoms, contains hydrophilic dyestuff molecules in sufficiently high concentrations as to be a suitable for use in colouring textiles and/or fabrics. The simultaneity of valorizing a botanical biomass by producing multiple products with different utility using a one-pot process was not apprehended by the prior art.

Given that both a first valuable product such as a fragrance, flavour, cosmetic, medicine or other functional ingredient such as a wellness or nutritional ingredient, as well as a second valuable product - a dyestuff - can be simultaneously isolated from a botanical biomass in accordance with the present invention, the botanical biomass can be valorized as a source of not one, but multiple products with different properties and utilities, without any additional apparatus or other investment needed to isolate the dyestuff. Furthermore, the complex logistics and cost of processing, transporting and storing once-extracted botanical biomass is avoided. Still further, the isolation and recovery of the dyestuff can be CO₂ neutral as no additional energy needs to be expended over that used to isolate the first product. And finally, because there is no lengthy transportation or storage of waste biomass before extraction of the dyestuff, the whole process is less susceptible to the risks associated with microbial contamination.

As used herein, the term botanical biomass refers is intended to refer to plant material, algae or fungi in a form in which it is harvested or otherwise obtained from forestry, agricultural, aquaculture or horticultural activities in unexploited form, and more specifically, in a form not extracted to remove valuable material from it. The biomass can be sourced, in particular, from alimentary crops, such as fruits and vegetables, herbs, trees, including but not limited to flower trees, deciduous trees, bushes and pine trees, or the resin or gums obtained therefrom. The term includes whole plants, or parts thereof, including roots, leaves, flowers, twigs, aerial parts, seeds, pulp, peels, gum, petals, draff, wood, beans, stems, fruits and the like. The term also includes plants or parts thereof that can be operated upon, for example by slicing, chopping, pelletizing, cutting, drying or milling, before being used in a process according to the present invention. The term is not intended to include waste residues, or any biomass that is already extracted or exhausted, for example, by a hydrophilic solvent or aqueous solvent, such as water or an alcohol, or mixtures thereof, in another industrial process.

In accordance with certain embodiments, the process of the present invention can be carried out by a process comprising the steps of hydro-distillation or steam-distillation.

In particular embodiments of the invention, the process of preparing the dyestuff comprises the steps of:
- providing a botanical biomass containing an oil useful as a flavour, fragrance, cosmetic or medicinal ingredient;
- subjecting the biomass to a process of hydro-distillation to separate an oil-containing phase from an aqueous phase containing the dyestuff; and
- recovering the dyestuff in an aqueous solution.

In the hydro-distillation process according to the invention, the botanical biomass is placed in a suitable receptacle inside a still. The biomass is then submerged in water. An operative mixture of biomass and water that can be used in the still may be within the range of 1 to 0.5, to 1 to 0.25 ratio by weight of biomass in water.

The mixture of biomass and water is then heated for a time period sufficient to extract the oil. Depending on the nature of the botanical biomass and the part of the plant being extracted, this can take about 1 hour up to several days. For example, if flower petals are used as the botanical biomass then the process may run for a relatively short time, for example about one to five hours. The time can be increased to several days if the biomass is more recalcitrant, for example wood bark or wood logs. By running the hydro-distillation process for an appropriate time, and at an appropriate temperature the biomass will release its valuable oil, which is driven upwards in the still, on a column of water vapour to be condensed and finally separated from the water vapour. The water vapour itself is condensed and captured in the bottom of the still as a water phase. The condensed oil can then be collected and valorized in, for example, the fragrance, flavour, cosmetic, medical or well-being industries, as appropriate. In prior art distillation processes, it is conventional that the aqueous medium captured in the bottom of the still (often referred to as the still bottoms) would be discarded as waste, or treated and composted. However, the applicant found that the process of hydro-distillation is not only effective as a means of separating valuable volatile oils from a biomass. At the same time it also effectively liberates hydrophilic, non-volatile and highly coloured materials from the biomass in sufficiently high yields to enable the aqueous phase, to be used as a dyestuff to colour textiles.

Typical of the botanical biomasses employed in the extraction of oils useful in, for example, the fragrance, flavour and cosmetic industries, they yield highly coloured still bottoms that contain dyestuffs of chemical classes selected from the group consisting of anthraquinones, flavonoides, flavonones, flavonols, tannin derivatives and anthocyanins. Representative examples of these classes of molecules are selected from the group consisting of quercetin, kaemferol, rhamnetin, apigenin, luteolin, aurone, chalcone, carminic acid, pseudopurpurin, purpurin, brazilein, haematein, cyanidin, pelargonidin, delphinidin, peonidin, petunidin, malvidin, tannic acid, gallic acid and ellagic acid.

Typical concentrations of a dyestuff contained in aqueous solution can be between 0.01 and 10 wt%, more particularly between 0.1 and 5 wt%.

The exhausted biomass can be drained and removed from the still. Optionally, the remaining aqueous phase containing the dyestuff can be concentrated by evaporation in order to create a solution that is more economical to transport, and also to be presented in an appropriate concentration for storage in a dyeing facility and for any subsequent textile dyeing steps. Preferably, the evaporation step can be carried out in the still as this provides the advantage that the accumulated heat from the extraction process can be utilized to concentrate the aqueous solution. By means of the evaporation step, the aqueous solution may be concentrated to any desirable extent. In particular embodiments, a 2-fold to 20-fold evaporation can be carried out, more particularly a 5-fold to 10-fold evaporation.

Evaporation apparatus may be employed to carry out this step, including film evaporators, nucleate boiling evaporators, flash evaporators and direct contact evaporators. Other concentration technologies can also be employed, for example membrane technologies.

The aqueous solution containing the dyestuff can be stabilized against microbial contamination by the addition of a suitable preservative, before being presented for a subsequent textile dyeing step.

In particular embodiments of the invention, the process of preparing the dyestuff comprises the steps of:
- providing a botanical biomass containing an oil useful as a flavour, fragrance, cosmetic, medicinal or wellness ingredient;
- subjecting the biomass to a process of steam-distillation to separate an oil-containing phase from an aqueous phase containing the dyestuff; and
- recovering the dyestuff in an aqueous solution.

The process of steam distillation is substantially the same as that of hydro-distillation described above. However, instead of using water to separate a volatile oil from the biomass by submerging the biomass in water, steam is passed over it. Steam distillation processes can achieve higher temperatures than employed in a hydro-distillation process, and the choice of hydro-distillation or steam distillation can be made depending on the particular biomass employed, and the particular parts of the plants that are to be extracted.

In a process of steam distillation, a botanical biomass and the volatile oils it contains are separated from the biomass on a rising stream of steam that passes over and through the biomass. The volatile oils are condensed in a condenser and collected in a separate chamber. The same considerations for the duration of distillation apply as those described above in relation to hydro-distillation.

The applicant found that in a process of steam distillation to extract a volatile oil fraction from a botanical biomass, dyestuff molecules were likewise liberated from the biomass, dissolved in aqueous droplets formed on the biomass residue. These droplets can be rinsed off the biomass such that the rinse water forms an aqueous solution containing the dyestuff in the bottom of the still. Typically one might use anywhere between zero and 200 kg of rinse water to separate the dyestuff from 100kg of the biomass residue. Thereafter, the down-stream processing steps of collecting the aqueous solution, as well as the optional evaporation step, and the preservation step may be the same as the down-stream process described above with regard to the hydro-distillation process.

The process of the present invention using the step of steam-distillation can be used to yield aqueous solutions of dyestuffs of various chemical classes including anthraquinones, flavonoides, flavonones, flavonols, tannin derivatives and anthocyanins. Representative examples of molecules falling within these chemical classes include but are not limited to quercetin, kaemferol, rhamnetin, apigenin, luteolin, aurone, chalcone, carminic acid, pseudopurpurin, purpurin, brazilein, haematein, cyanidin, pelargonidin, delphinidin, peonidin, petunidin, malvidin, tannic acid, gallic acid and ellagic acid.

In particular embodiments of the present invention the process of preparing the dyestuff comprises the steps of:
- providing a botanical biomass containing an oil useful as a flavour, fragrance, cosmetic or medicinal ingredient;
- treating the biomass with an organic solvent in which the oil is soluble to form an oil-containing phase;
- separating the oil-containing phase from the biomass;
- subjecting the biomass to a process of steam distillation to remove any residual solvent from the biomass and to create an aqueous phase containing the dyestuff; and
- recovering the dyestuff in an aqueous solution.

In a process of solvent extraction described above, the botanical biomass is placed in a still and is steeped in a suitable organic solvent selected on the basis of its ability to dissolve the oil that is sought. In this manner, the oil is taken-up into the solvent and separated from the biomass. This process may take as little as up to one hour or as much as several days, and at a temperature ranging from room temperature to about 70 to about 100 degrees centigrade, depending on the type of botanical employed. Suitable organic solvents include, but are not limited to hydrophobic and/apolar solvents, and in particular those selected from the group consisting of hexane, heptane, cyclohexane, toluene, ethyl acetate, dichloromethane, dimethylcarbonate, Methyl esters of fatty acids, or mixtures thereof.

Applicant discovered in a surprising manner that through the judicious selection of the organic solvent, it is possible to separate the oil from the biomass, whilst at the same time retaining the dyestuff in the biomass.

After solvent treatment to separate the oil, the biomass is saturated with solvent. The biomass can be steam-distilled to remove the solvent. Normally, removal of the solvent is carried out in order to prepare the biomass waste for compositing in an operation that can take from as little as about one hour or for as long as several hours. However, the applicant discovered that as a result of the steam-distillation process, the dyestuff leaches out of the biomass and forms in droplets of water on the biomass residues. These droplets can be collected as an aqueous solution containing the dyestuff by rinsing the biomass residues as described above.

The dyestuffs extracted by such a process include those of the chemical classes including anthraquinones, flavonoides, flavonones, flavonols, tannin derivatives and anthocyanins. Representative compounds selected from these chemical classes include but are not limited to quercetin, kaemferol, rhamnetin, apigenin, luteolin, aurone, chalcone, carminic acid, pseudopurpurin, purpurin, brazilein, haematein, cyanidin, pelargonidin, delphinidin, peonidin, petunidin, malvidin, tannic acid, gallic acid and ellagic acid. The dyestuffs may be present in aqueous solution in a concentration of between about 0.01 and about 30 wt%, and more particularly between about 1 and about 10 wt%.

In accordance with the processes of the present invention, the dyestuff is removed from the still in the form of an aqueous solution, which is optionally concentrated by evaporation, and prepared for textile dyeing in the same manner as described above in relation to the process of steam distillation.

The aqueous solutions containing these natural dyestuffs form additional aspects of the present invention.

It will be understood by the skilled person in the art that the processes according to the present invention are modifications of existing processes for extracting botanical materials to obtain oils of great interest to the fragrance, flavour, cosmetic, medicinal and well-being industries. The applicant found that many botanicals not generally known or exploited for their tinctorial properties, but which are widely used in the fragrance, flavour, cosmetics, medicinal or well-being industries could be used to obtain natural dyestuffs in sufficiently high yields to be useful in the textile dyeing industry.

The present invention can be carried out on all manner of botanical biomasses, including but not limited to rose, clove, violet, sandalwood, onions, peppermint, chamomilla, lavandin & lavender, eucalyptus, basil, cacao, cardamon, cassia bark, celery, cinnamon bark, cistus, coffee, coriander, cumin, guaiacwood, myrrh, olibanum, patchouli, schinus molle, styrax, tea, pepper, cedar wood, chicoree, citrus, cranberry, elemi, ginger, hibiscus, oakmoss, olive, orange, grape, mate, rosemary, sauge, thyme, tonka, quillaja, mushrooms and algae.

The simultaneous extraction of both the valuable oil and the dyestuff in the same distillation apparatus is advantageous for all of the economic and environmental reasons set out above. However, in addition to these advantages, carrying out the extraction of dyestuffs concomitantly with the extraction of the valuable oil means that the biomass has been subjected to less processing steps and as such, the tone, tint and shade of the colours obtainable can be improved.

By means of a portable distillation still, the process according to the present invention could be carried out in the immediate vicinity of a botanical crop. Once harvested, a botanical biomass could be immediately fed into the still and extracted to provide concomitantly, both a valuable oil and also an aqueous solution containing a dyestuff. A portable laboratory comprising a distillation unit, and optionally other equipment to carry out other down-stream operations on the oil and dyestuff such as water evaporation and analytical measurements, forms another aspect of the present invention.

The dyeing of textiles using the aqueous solutions containing dyestuffs obtained according to the methods described herein can be carried out according to dyeing processes generally known in the art. All manner of textiles can be dyed in accordance with the present invention, including but not limited to proteinic fibres, such as wool and silk, and cellulosic fibres such as cotton, flax and hemp. Accordingly, use of the dyestuffs obtained according to the processes described herein to colour textiles and fabrics, as well as the coloured textiles and fabrics form additional aspects of the present invention.

In a typical dyeing process, a textile or fabric is passed through and soaked in the aqueous solution containing the dyestuff. This may be carried out at ambient temperature, or at elevated temperature, for example between about 20 to about 150 degrees centigrade, and the dyeing process may proceed through a temperature gradient of gradually increasing and/or decreasing the temperature.

The aqueous solution comprising the dyestuff may also contain common auxiliaries, such as wetting agents, typically used in dyeing processes.

The dyestuffs prepared in accordance with the present invention may display varying levels of substantivity on textiles and fabrics, and it may be desirable to employ mordants in the dyeing process. Mordants create an affinity between the textile or fabric fibres and the dyestuff molecules. Mordanting can be achieved according to methods generally known in the art, for example by pre-mordanting (before dyeing), simultaneously mordanting and dyeing, or by post-mordanting (after dyeing). Different types of mordants can be applied on a textile or fabric to increase the dye uptake of natural dyes, or to affect the quality of dyeing, for example adjustment of the hue.

Mordants are typically metal salts that form complexes between the fibres of a textile or fabric and the dyestuff molecules. After mordanting, the metal salts anchoring to the fibres, attract the dye molecules to be anchored to the fibres and finally creates the bridging link between the dye molecules and the fibre by forming coordinating complexes. Aluminium sulphate or other metallic mordants anchored to any fibre, chemically combine with certain mordantable functional groups present in the dye molecules and bind by coordinated/covelent bonds or hydrogen bonds or other interaction forces.

Suitable metal salts include salts of tannic acid, aluminium potassium sulphate dodecahydrate, iron (II) sulphate heptahydrate, and chromium potassium sulfate.

After dyeing, a washing step can be performed to remove any unfixed dye molecules.

The dyestuffs obtained according to a process of the present invention display affinity for textiles or fabrics, preferably proteinic fibers like wool or silk or cellulosic fibers like cotton or linen more preferably proteinic fibers like wool or silk with good fastness properties, e.g. wet, rub and light fastness. However, the greatest interest and main characteristic of this invention comes from the fact that the dyestuffs enable the dyeing of textiles or fabrics in a sustainable way, avoiding the use of toxic compounds, and reducing the CO2 generation in comparison with present known procedures of the prior art.

The aqueous solutions containing a dyestuff formed according to a process according to the present invention are capable of delivering vibrant colours to textiles and fabrics. By adjusting the type of mordant and the concentration of dyestuff in the aqueous solution, one can influence the shade, tint or tone of coloured textiles and fabrics.

For example, when wool is dyed with aqueous solutions obtained from the process according to the present invention typically a brown shade is obtained. But when aluminium potassium sulphate is employed as a mordant a yellow shade can be obtained. Similarly, when iron (II) sulphate heptahydrate is employed as the mordant, a dark grey to black shade can be obtained. Other shades can be obtained by varying the concentration and types of mordant employed in the dyeing process.

The inventionwill be further illustrated by reference to the following examples.

### Example 1

### (Fragrance & colour extraction process from rose biomass)

20kg of fresh rose petals are placed in a still and are submerged in dimethyl carbonate. The mixture is agitated for several hours.

The dimethyl carbonate extract is then collected and subjected to vacuum processing to remove the solvent for re-use. The remaining waxy mass which is called a rose concrete is then mixed with alcohol to remove the wax and other substances by filtration. The alcohol is then evaporated to give the absolute which could be used for fragrances or cosmetics formulations.

The rose petals are treated with steam for 1 hour to drive off any remaining dimethyl carbonate. At the end of the operation, 13kg of coloured condensed water with a dried substance content of 2% are collected. The residue is then washed with water before being removed from the still. The washings are added to the condensed water. Thereafter, 20g of citric acid and 75g of Sensiva PA40 is added to the coloured aqueous solution. After 10 min stirring the dyeing solution is filtered and packed.

The solution can be characterized using a spectrophotometric colourimeter (Lovibond PFX195) following the ASTM E308 method. The CIElab values for the solution were measured to be a 15 b 62 L 58.

### Example 2

### (Dyeing of wool)

The coloured aqueous solution in combination with traditional and eco-friendly mordants (iron sulfate or aluminum potassium sulfate) is used as such to dye natural white wool according to the following procedure:
A swatch of wool (0.5kg) is soaked in the coloured aqueous solution obtained according to the process of Example 1 at 20 degrees centigrade for 10 minutes. Thereafter, the temperature of the solution is increased to 95 degrees centigrade at a rate of 2 degrees centigrade per minute. The textile is soaked for 15 minutes at 95 degrees centigrade before a mordant is added (aluminum potassium sulfate 0.05kg). After the addition of the mordant, the textile remains soaked in the solution for a further 35 minutes at 95 degrees centigrade. Finally, the solution is cooled to 70 degrees centigrade before it is drained from the textile, and the textile washed. After drying, a deep yellow wool is obtained.

### Example 3

### (Wash-Fastness)

Wash-fastness was determined at 40 °C according to DIN 54014. The washing liquors employed were L-1 FAS (0.45g.L-1), sodium lauryl sulfate (0.5 g L-1 APG) and alkyl polyglycoside. The dyed samples (1 g) were treated for 30 min at 40 °C with 50g of washing liquor. After rinsing and drying, the change in colour of the samples was determined visually. The changes were related to a standard scale (marks 1-5, 1 = poor, 5 = excellent). The results of the test established that the wash-fastness was excellent.

## Claims

1. A process of preparing a dyestuff comprising the steps of:
- providing a botanical biomass containing an oil useful as a flavour, fragrance, cosmetic, medicinal or well-being ingredient;
- heating the biomass in the presence of water to separate an oil-containing phase from an aqueous phase containing the dyestuff; and
- recovering the dyestuff in an aqueous solution.

2. A process according to claim 1 comprising the steps of:
- providing a botanical biomass containing an oil useful as a flavour, fragrance, cosmetic, medicinal or well-being ingredient;
- subjecting the biomass to a process of hydro-distillation to separate an oil-containing phase from an aqueous phase containing the dyestuff; and
- recovering the dyestuff in an aqueous solution.

3. A process according to claim 1 comprising the steps of:
- providing a botanical biomass containing an oil useful as a flavour, fragrance, cosmetic, medicinal or well-being ingredient;
- subjecting the biomass to a process of steam-distillation to separate an oil-containing phase from an aqueous phase containing the dyestuff; and
- recovering the dyestuff in an aqueous solution.

4. A process according to claim 1 comprising the steps of:
- providing a botanical biomass containing an oil useful as a flavour, fragrance, cosmetic, medicinal or well-being ingredient;
- treating the biomass with an organic solvent in which the oil is soluble to form an oil-containing phase;
- separating the oil-containing phase from the biomass;
- subjecting the biomass to a process of steam distillation to remove any residual solvent from the biomass and to create an aqueous phase containing the dyestuff; and
- recovering the dyestuff in an aqueous solution.

5. A process according to any of the preceding claims wherein the botanical biomass is selected from the group consisting of rose, clove, violet, sandalwood, onions, peppermint, chamomilla, lavandin & lavender, eucalyptus leaves, basil, cacao, cardamon, cassia bark, celery, cinnamon bark, cistus, coffee, coriander, cumin, guaiacwood, myrrh, olibanum, patchouli, schinus molle, styrax, tea, pepper, cedar wood, chicoree, citrus, cranberry, elemi, ginger, hibiscus, oakmoss, olive, orange, grape, mate, rosemary, sauge, thym, tonka, quillaja, mushroom and algae.

6. An aqueous solution comprising a dyestuff obtained by the process according to the any of the preceding claims.

7. An aqueous solution according to claim 6 comprising an anthraquinone, a flavonoide, a flavonone, a flavonol, a tannin derivative or an anthocyanin.

8. The use of an aqueous solution as defined in claim 6 or claim 7 for colouring a textile or fabric.

9. The use according to claim 8, wherein the textile or fabric is selected from the group consisting of those containing proteinic fibers, including wool or silk, and those containing cellulosic fibers, including cotton or linen.

10. A textile or fabric coloured with an aqueous solution according to claim 6 or claim 7.

11. A portable apparatus for conducting a process according to any of the claims 1 through 5.
